# EUROPEAN PATENT APPLICATION

(11) **EP 1 404 069 A2**
(43) Date of publication of application: **31.03.2004**
(21) Application number: 03021564.4
(22) Date of filing: 24.09.2003
(51) Int. Cl.: H04L 12/56

(54) **Network relaying device and network relaying method**

(30) Priority: 30.09.2002 JP 2002287117
(71) Applicant: Kabushiki Kaisha Toshiba, Tokyo (JP)
(72) Inventor: Matsushita, Ken, Tokyo 105-8001 (JP); Konda, Kazunobu, Tokyo 105-8001 (JP); Kokubo, Takashi, Tokyo 105-8001 (JP)
(74) Representative: Henkel, Feiler & Hänzel

(57) **Abstract**

A network relaying device is disclosed, wherein the buffer sizes of transmitting-side devices, a transmitting-side network relaying device, a receiving-side network relaying device for performing a relaying operation with the transmitting-side relaying device, and a receiving-side device are detected, and the minimum one of the buffer sizes thus detected is determined as a maximum transferable size by a determining unit (29). In accordance with this maximum transferable size, the maximum transferable size information for the transmitting-side devices is updated by an updating unit (25).

## Description

The present invention relates to a network relaying device for performing the relaying operation with a plurality of wire networks, and in particular to a network relaying device and a network relaying method for achieving stable communication by optimizing the size of transferred packets.

With the recent development and extension of the use of digital devices, demand has increased for a network communication device for communication between these digital devices. As such a conventional data transfer technique (see the patent reference 1, for example), a packet coupling method for a network relaying device has been disclosed. In this conventional technique, the maximum transfer unit (MTU) of a transmission path is taken into consideration, and the transfer rate is increased by coupling the packets to the magnitude of the MTU and thus increasing the packet size. This data transfer technique is aimed at improving the communication efficiency by increasing the packet size for the relaying technique of a wire network.

On the other hand, the fact that the packets to be transferred are larger than the maximum transferable size sometime makes the transfer impossible. Specifically, in the asynchronous packet transmission and receiving between the devices on the same network, the packets transmitted from a transmitting-side device are written directly in the receiving buffer making up a receiving-side device. The upper limit of the packet size that can be transmitted at a time, therefore, depends on the size of the receiving buffer constituting a receiving-side device. For transmitting the packets larger than the receiving buffer size of the receiving-side devices, therefore, the transmitting-side devices are required to divide a desired transmission packet into packets each not larger than the receiving buffer size of the receiving-side devices, and transmit the divided packets in a plurality of sessions. For this reason, the transmitting-side devices are required to investigate the maximum receivable size of the receiving-side devices in advance.

This requirement is highly crucial in the case where a plurality of wire networks are relayed (by radio or wire) through a network relaying device rather than in the case where communication is carried out with a single wire network. Even in the case where the packet size is optimized according to the wire network communication standards, the communication between the devices on a plurality of networks cannot be carried out with the optimum packet size unless the maximum transferable size is taken into consideration based on the buffer size, etc. of the network relaying device. Specifically, the conventional device poses the problem that the radio communication by the network relaying device and the long-distance network relaying device are liable to have an insufficient transfer capacity. Also, the packet size is determined without considering the maximum receivable size of the network relaying device with a somewhat small buffer size. As a result, the packet size is not optimized and the stable communication is impossible.

More specifically, in the conventional network relaying device, assume that different wire networks are relayed by a network relaying device and communication is carried out between electronic devices on each network according to the wire network communication standards. The packet size is determined taking the buffer size, etc. of each electronic device into consideration based on the functions under the communication standards without considering the maximum receivable size of the network relaying device which is liable to have an insufficient communication speed and buffer size. As a result, the buffer size of the network relaying device is liable to become insufficient as compared with the packets, thereby leading to the problem that the packet transfer sometimes becomes impossible.

An embodiment of this invention is to provide a network relaying device and a network relaying method for achieving a stable communication by determining the maximum transferable size of a packet taking the buffer size, etc. of the network relaying device into consideration as well as the buffer size, etc. of the devices on a wire network.

In order to solve the above-mentioned problem, according to this invention, there is provided a network relaying device comprises a determining unit which detects size information for data transfer of devices including a transmitting-side device arranged on network, a transmitting-side network relaying device connected to the transmitting-side device, a receiving-side network relaying device for performing a relaying operation with the transmitting-side network relaying device, and a receiving-side device connected to the receiving-side network relaying device and arranged on the receiving-side networks, and which determines the minimum one of the size information as a maximum transferable size; and an updating unit which updates a maximum transferable size information of the transmitting-side device based on the maximum transferable size determined by the determining unit. In the network relaying device according to this invention, the size information for data transfer such as buffer size or maximum command size, for example, is acquired for a network relaying device for relaying a plurality of wire networks as well as for a transmitting-side device and a receiving-side device on a wire network, and the minimum one of the size information is considered as a bottleneck and determined as a maximum transferable size. Generally, a radio network or a long-distance network has a lower transfer capacity and hence a smaller buffer size than a wire local network. To take the buffer size, etc. of the network relaying device into consideration, therefore, is crucial for improving the efficiency of the transfer rate of the whole device. Further, once the maximum transferable size is determined, the maximum transferable size information for at least the transmitting-side device is updated. In this way, a packet can be divided into plural ones of optimum size. As a result, the communication speed for the whole device can be improved in efficiency.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a configuration of a network relaying device according to the invention;
FIG. 2 is a device diagram showing an example of a network relaying system using network relaying devices according to the invention;
FIG. 3 is a diagram for explaining an example of the information stored in a receiving buffer size storage unit of each network relaying device according to the invention;
FIG. 4 is a diagram for explaining an example of the information managed by a maximum transferable size storage unit of each network relaying device according to the invention;
FIG. 5 is a flowchart showing the operation for determining the maximum transferable data size using the receiving buffer size in a network relaying device according to a first embodiment of the invention;
FIG. 6 is a flowchart showing the operation for determining the maximum transferable data size using the maximum command size in a network relaying device according to a second embodiment of the invention; and
FIG. 7 is a flowchart showing the operation for determining the maximum transferable data size using the receiving buffer size in a network relaying device according to a third embodiment of the invention.

An example of a network relaying device and a network relaying method according to the invention will be explained below with reference to the accompanying drawings.

### [First embodiment]

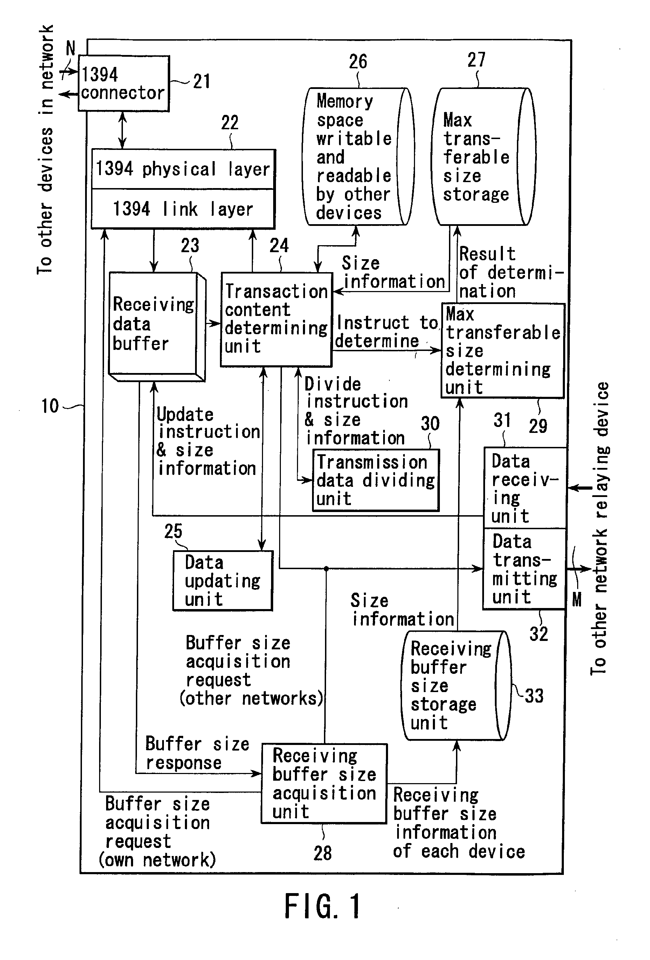

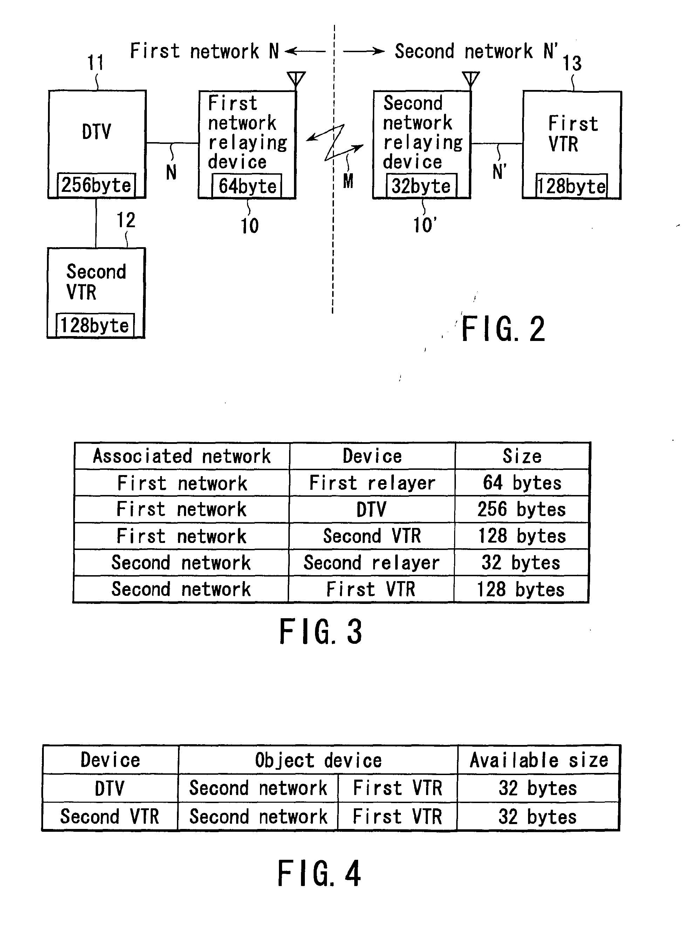

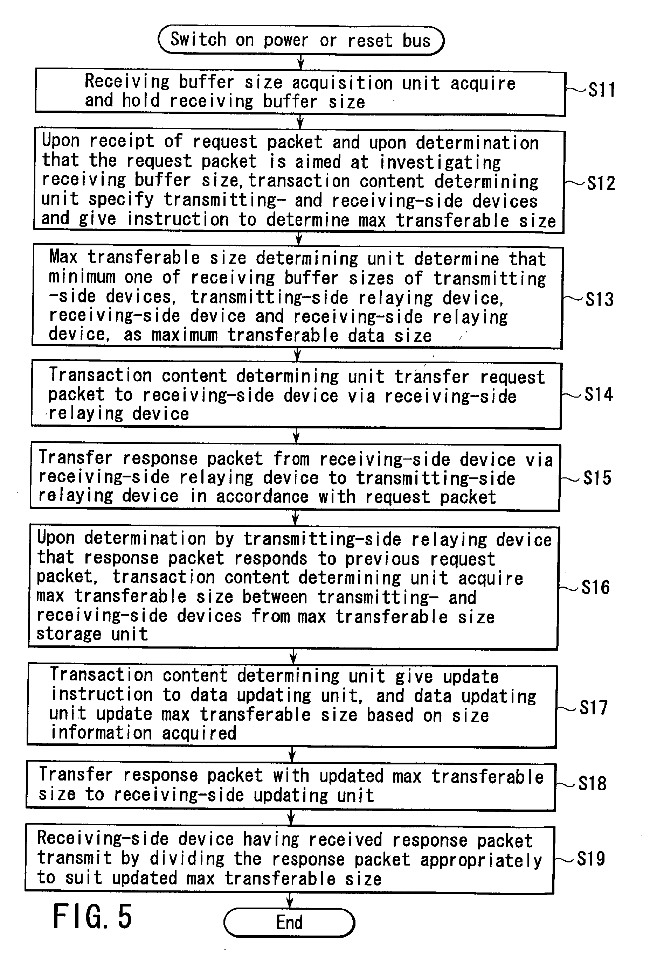

According to a first embodiment of the invention, there is provided a network relaying device for achieving stable communication, wherein the buffer size of each network relaying device as well as the buffer size of electronic devices on a wire network is detected, and the minimum one of the buffer sizes thus detected is determined as a maximum transferable size, whereby the maximum transferable size information of the transmitting-side device is updated. Especially, the packet size is determined taking also the buffer size of each network relaying device into consideration. FIG. 1 is a block diagram showing an example of a configuration of a network relaying device according to the invention, FIG. 2 is a system diagram showing an example of a network relaying system using the network relaying devices according to this invention, FIG. 3 is a diagram for explaining an example of the information stored in a receiving buffer size storage unit, FIG. 4 is a diagram for explaining an example of the information managed by a maximum transferable size storage unit 27, and FIG. 5 is a flowchart showing the operation of determining the maximum transferable data size using the receiving buffer size in a network relaying device according to the invention.

### [System example]

In an example of a network relaying system using network relaying devices according to this invention, as shown in FIG. 2, AV devices (digital television DTV 11, video tape recorder: first VTR 13, video tape recorder; second VTR 12) and two network relaying devices (first network relaying device 10, second network relaying device 10') according to the invention are connected to each other, respectively, on a plurality of independent wire networks N, N'.

The first network N is configured of the DTV 11, the second VTR 12 and the first network relaying device 10. These devices are connected to each other by a digital interface IEEE 1394. Nevertheless, another digital interface such as USB2.0 or the like can be used with the same effect. Similarly, the second network N' is configured of the first VTR 13 and the second network relaying device 10', and these devices are interconnected by IEEE 1394. The first network relaying device 10 and the second network relaying device 10' carry out radio communication using a protocol such as IEEE 802.11, for example. Nevertheless, the invention is applicable also to a wire network relaying device using a protocol such as IEEE 1394b.

The AV devices 11, 12, 13 and the network relaying devices 10, 10' shown in FIG. 2 each have mounted thereon a receiving buffer for receiving data packets. By way of explanation, assume that the size of the receiving buffer of each device is 256 bytes for the DTV 11, 128 bytes for the first VTR 13, 128 bytes for the second VTR 12, 64 bytes for the first network relaying device 10, and 32 bytes for the second network relaying device 10'.

### [Example of network relaying device]

An example of a configuration of a network relaying device according to the invention will be explained with reference to FIG. 1. A network relaying device 10 comprises a 1394 physical layer and a 1394 link layer 22 connected to a 1394 connector 21, a receiving data buffer 23 connected to the 1394 physical layer and the 1394 link layer 22, and a transaction content determining unit 24 connected to the receiving data buffer 23 for controlling and coordinating the whole operation. The network relaying device 10 further comprises devices connected to the transaction content determining unit 24, including a data content updating unit 25, a memory space 26 capable of being read and written by other devices, a maximum transferable size storage unit 27, a maximum transferable size determining unit 29 and a transmission data dividing unit 30. The network relaying device 10 also comprises a receiving buffer size acquisition unit 28 connected to the 1394 physical layer and the 1394 link layer 22 and the receiving data buffer 23. The receiving buffer size acquisition unit 28 is further connected to the receiving buffer size storage unit 33 and the data transmitting unit 32. Further, the network relaying device 10 comprises a data receiving unit 31 connected to the receiving data buffer 23, etc.

### [Operation flowchart]

The process for determining and updating the maximum transferable size using the receiving buffer of the network relaying device 10 shown in FIG. 1 will be explained in detail with reference to the flowchart of FIG. 5.

First, in step S11 of the flowchart shown in FIG. 5, the receiving buffer size acquisition unit 28 of the network relaying device 10 investigates the maximum data size each device can receive in one asynchronous transaction as a part of the initialization process executed after switching on power or resetting the bus with a change in the configuration of the devices connected to the network (S11). The investigation of the devices in the network associated with the network relaying device 10 is conducted by transmitting an investigation request packet to the particular devices through the 1394 units 21, 22 (1394 link layer, 1394 physical layer, 1394 connector) and analyzing by fetching from the receiving data buffer 23 the response packets returned from the devices. The receiving buffer information for the devices in the network acquired by the analysis is stored in the receiving buffer size storage unit together with the receiving buffer information of the network relaying device itself (S11).

In the system of FIG. 2, for example, the first network relaying device 10 investigates the DTV 11 and the second VTR 12 of the first network N associated therewith and has the acquired receiving data buffer size information stored in the receiving buffer size storage unit 33 together with the information on the first network relaying device 10 itself.

The investigation of the devices other than those associated with the network N of the network relaying device 10 is conducted by transmitting an investigation request packet to the network associated with the particular devices through the data transmitting unit 32 and analyzing by fetching from the receiving data buffer 23 the response packets returned by the devices. The receiving buffer information of each device of the other networks acquired by this analysis are stored in the receiving buffer size storage unit 33.

In FIG. 2, for example, the first network relaying device 10 investigates the second network relaying device 10' and the first VTR 13 of the second network N' through the second network relaying device 10', and has the acquired receiving data buffer size information stored in the receiving buffer size storage unit 33.

An example of the information stored in the receiving buffer size storage unit 33 upon completion of the process up to this stage is shown in FIG. 3. Each AV device connected to the network acquires the basic information such as the device type and the device name of the other devices as an initialization process after power is switched on or the bus resetting with a change in the configuration of the devices connected to the network. The basic information investigated includes the maximum data size that each device can receive in one asynchronous transaction.

In the transactions used for this investigation, the request packet for acquiring the information on the devices connected to other networks is transmitted through the network relaying devices 10, 10' to a receiving-side device involved.

Consider a case in which the DTV 11 shown in FIG. 2, for example, transmits an investigation request packet through the network device to the first VTR 13 in order to investigate the maximum data size the first VTR 13 can receive in one asynchronous transaction. The request packet transmitted by the DTV 11 is received by the 1394 units 21, 22 (1394 connector, 1394 physical layer and 1394 link layer) of the first network relaying device 10 and written in the receiving data buffer 23.

Next, in step S12 of the flowchart shown in FIG. 5, the transaction content determining unit 24 determines whether the request packet written in the receiving data buffer 23 is aimed at investigating the receiving buffer size of the devices associated with the other networks or not. Various criteria are conceivable for this determination. An example is a method of determining whether the request packet is a read request packet for the maximum receivable size information of each device written in the memory space capable of being read by other devices.

A device having the 1394 interface, for example, has a memory space capable of being read and written by other devices through the 1394 units connected at the same time. This device has a readable area called the configuration ROM including the description of various basic information as a part thereof. This area includes, at a specific address (OxFFFFF0000408), what is called the max_rec field where a maximum data size that can be received in one asynchronous transaction. In the case where the request packet is aimed at requesting the reading of this address, therefore, it can be determined that the request packet is aimed at investigating the receiving buffer size of the devices associated with other networks.

In the case where the determination is negative, the request packet is transferred directly to the network relaying device of the network associated with the receiving-side device designated by the header of the request packet using the data transmitting unit 32.

In the case where the determination is affirmative, on the other hand, the transaction content determining unit 24 delivers the information on the request packet transmitting-side device and the receiving-side device designated by the header of the request packet to the maximum transferable size determining unit 29 and instructs the maximum transferable size determining unit 29 to determine the maximum transferable data size for the communication path from the transmitting-side device to the receiving-side device (S12).

Next, in step S13 of the flowchart shown in FIG. 5, the maximum transferable size determining unit 29 determines the maximum transferable data size for the communication path from the transmitting-side device designated by the transaction content determining unit 24 to the receiving-side device based on the information on the receiving buffer size of each device managed by the receiving buffer size storage unit 33.

The maximum transferable data size is determined by a method in which the sizes of the receiving packets held in the designated transmitting-side device 11, the network relaying device 10 associated with the transmitting-side device 11, the network relaying device 10' associated with the designated receiving-side device 13 and the receiving-side device 13 are compared with each other, and the minimum size among them is determined as a maximum transferable data size (S13).

In the case where the transaction content determining unit 24 issues an instruction to determine the maximum transferable data size for the communication path from the DTV 11 of the first network N to the first VTR 13 of the second network N', for example, the determining unit 29 determines the maximum transferable data size as 32 bytes for the communication path from the DTV 11 to the first VTR 13, which is found to be the minimum value as the result of comparison among the size of 256 bytes of the receiving data buffer 23 of the DTV 11 constituting a designated transmitting-side device, the size of 64 bytes of the receiving data buffer 23 of the first network relaying device 10 of the first network N associated with the DTV 11, the size of 32 bytes of the receiving data buffer 23 of the second network relaying device 10' of the second network N' associated with the first VTR 13 constituting a designated receiving-side device and the receiving data buffer size of 128 bytes of the first VTR 13 making up a receiving-side device.

The value of the data size thus determined is managed by being written in the maximum transferable size storage unit 27 as a determination result.

Next, in step S14 of the flowchart shown in FIG. 5, after an instruction is given to the maximum transferable size determining unit 29 in step S12, the transaction content determining unit 24 transfers, using the data transmitting unit 32, the request packet to the network relaying device 10' of the network associated with the receiving-side device designated by the header of the request packet. The network relaying device 10' making up a receiving-side device that has received the transferred request packet transfers the same request packet to the receiving-side device designated by the header of the request packet (S14).

In the example described above, the request packet is transferred from the first network relaying device 10 to the first VTR 13 after being transferred to the second network relaying device 10' making up a network relaying device associated with the first VTR 13 which is one of the receiving-side devices.

The request packet sent from the DTV 11 is an investigation request packet to investigate the maximum data size that the first VTR 13 can receive in each asynchronous transaction. In step S15 of the flowchart shown in FIG. 5, therefore, the size of 128 bytes of the receiving buffer mounted on the first VTR 13 is returned to the DTV 11 of the requesting first network N as a transaction response. This response packet, similarly to the request packet, is first received by the second network relaying device 10' of the second network N', and then transferred to the first network relaying device 10 of the first network N associated with the DTV 11 designated at the receiving end (step S15).

Next, the process of step S16 will be explained with reference to the flowchart of FIG. 5. The response packet received through the data receiving unit 31 is written in the receiving data buffer 23 by the first network relaying device 10. The transaction content determining unit 24 determines whether the received response packet is in response to the request packet that has been transferred in the process of step S14.

In the case where it is determined that the response packet is not such a response, the response packet is transferred to the receiving-side device (request packet transmitting-side device) designated by the header of the response packet, using the 1394 units 21, 22.

In the case where it is determined that the response packet is such a response, on the other hand, the transaction content determining unit 24 acquires the maximum transferable size among the request packet transmitting-side devices and the response packet transmitting-side devices (request packet receiving-side devices) from the information managed by the maximum transferable size storage unit 27 (S16).

Next, in step S17 of the flowchart shown in FIG. 5, the transaction content determining unit 24 instructs the data updating unit 25 to update the size information contained in the response packet together with the size information acquired (S17).

In the example described above, the maximum transferable size (32 bytes) between the DTV 11 making up a request packet transmitting-side device and the first VTR 13 making up a response packet transmitting-side device is acquired from the information shown in FIG. 4 managed by the maximum transferable size storage unit 27, and the data updating unit 25 is instructed to update the size information (128 bytes) contained in the response packet to 32 bytes.

The data updating unit 25 thus updates the information on the receiving data buffer size contained in the response packet to the value designated by the transaction content determining unit 24, and returns the updated value to the transaction content determining unit 24.

Next, in step S18 of the flowchart shown in FIG. 5, the response packet containing the information on the receiving data buffer size updated by the data updating unit 25 is transferred to the DTV 11 designated by the receiving-side device in the header of the response packet, through the 1394 units 21, 22 (S18).

Finally, in step S19 of the flowchart shown in FIG. 5, the DTV 11 that has received the response packet recognizes from the contents of the response packet that the maximum data size that the first VTR 13 of the second network N' can receive in one asynchronous transaction is 32 bytes.

As a result, a data packet larger than 32 bytes, which the DTV 11 may intend to transmit to the first VTR 13, is divided beforehand into a plurality of data packets each not more than 32 bytes in size (S19).

Assume, for example, that the DTV 11 produces and manages the tuning information of 256 bytes in size. Upon receipt of a request from the first VTR 13 to read this tuning information, the DTV 11 divides the tuning information into eight packets of 32 bytes and transmits them to the first VTR 13 in eight sessions. As a result, communication can be conducted with optimum packet size taking the buffer size of the network relaying device into consideration, and a network relaying device capable of achieving stable communication can be provided. Thus, stable communication is established with a protocol of optimum size between the transmitting-side electronic devices and the receiving-side electronic devices on the wire network by executing the process of the invention only for the network relaying device without any specific change in the protocol.

With the processing described above, the network relaying device according to the invention can establish stable data communication with each packet always divided into packets of a transferable size for the communication path between the devices on the wire network.

### [Second embodiment]

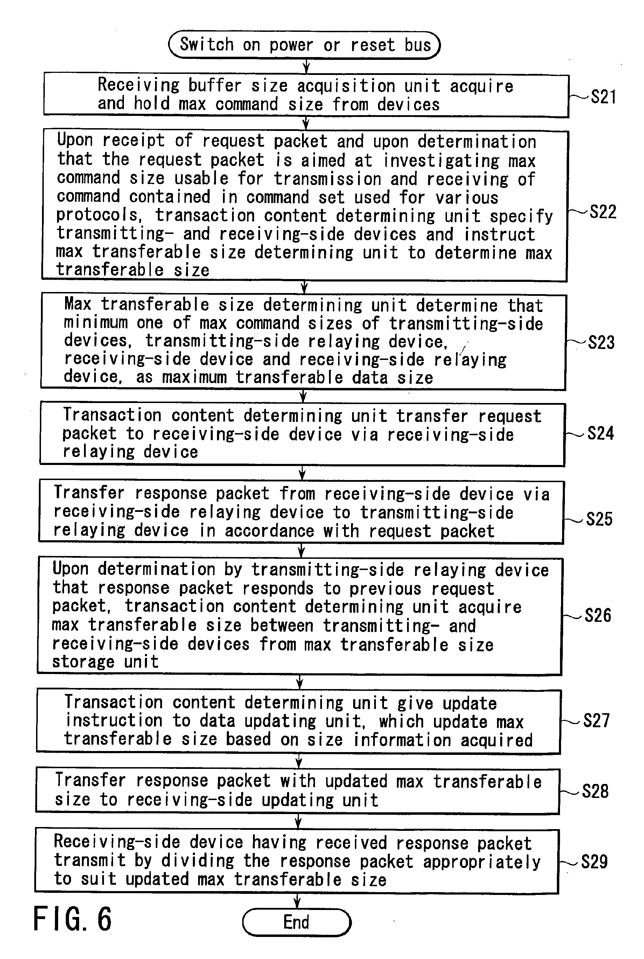

According to the second embodiment, there is provided a network relaying device in which the buffer size is not detected unlike in the first embodiment, but the maximum command size, i.e. the usable command length is detected not only for the electronic devices on the wire network but also for the network relaying device, and among these maximum command sizes, the minimum one is determined as a maximum transferable packet size thereby to update the maximum transferable size information of the transmitting-side devices. FIG. 6 is a flowchart showing the operation of determining the maximum transferable data size using the maximum command size for the network relaying device according to the second embodiment of the invention.

With reference to the drawings, the second embodiment of the invention will be explained below. The second embodiment also comprises AV devices and two network relaying devices connected in the network configuration shown in FIG. 2. Each network relaying device has a configuration as shown in FIG. 1, for example.

With reference to FIG. 1, each step of the process will be explained.

First, in step S21 in the flowchart of FIG. 6, the network relaying device 10 according to this invention so operates that a receiving buffer size acquisition unit 28 investigates the maximum size usable by each device for transmission and receiving of a command defined for each of various protocols as a part of the initialization process executed after power is switched on or after the bus is reset with a change in the configuration of the devices connected to the network (S21).

The investigation of the devices in the network associated with the network relaying device 10 is conducted by transmitting an investigation request packet through the 1394 units 21, 22 (1394 link layer, 1394 physical layer, 1394 connector) and analyzing by fetching the response packets returned by each device, from the receiving data buffer 23. The maximum command size information of each device in the network acquired by this analysis is stored in the receiving buffer size storage unit 33 together with the maximum command size information of the network device itself (S21).

In FIG. 2, for example, the first network relaying unit 10 investigates the DTV 11 and the second VTR 12 of the first network N of itself and stores the acquired maximum command size information in the receiving buffer size storage unit 33 together with the information on the first network relaying unit 10.

The investigation of the devices belonging to other than the network associated with the network relaying device 10 is conducted by transmitting an investigation request packet through the data transmitting unit 32 to the network associated with the devices to be investigated and analyzing by fetching the response packets returned by each device, from the receiving data buffer 23. The maximum command size information of each device of other network acquired by the analysis are stored in the receiving buffer size storage unit 33 (S21).

In FIG. 2, for example, the first network relaying device 10 investigates the first VTR 13 and the second network relaying device 10' of the second network N' through the second network relaying device 10' and has the acquired maximum command size information stored in the receiving buffer size storage unit 33. An example of the information stored in the receiving buffer size storage unit 33 after completing the process up to this stage is shown in FIG. 3.

Each AV device connected to the network acquires the basic information such as device type and device name from other devices as an initialization process executed after power is switched on or the bus is reset with the change in the configuration of the devices connected to the network. The basic information include the result of the investigation of the maximum size usable by each device for transmission and receiving of the command defined for various protocols. Of the transactions used for this investigation, the request packet for acquiring the information on the devices connected to other networks is transmitted to the devices involved through the network relaying device.

For example, consider a case in which the DTV 11 shown in FIG. 2 transmits an investigation request packet to the first VTR 13 through the network relaying device to investigate the maximum size usable by the first VTR 13 for transmission and receiving of the command defined for various protocols.

The request packet transmitted by the DTV 11 is received by the 1394 units 21, 22 (1394 connector, 1394 physical layer, 1394 link layer) of the first network relaying device 10 and written in the receiving data buffer 23.

Next, in step S22 of the flowchart shown in FIG. 6, the transaction determining unit 24 determines whether the request packet written in the receiving data buffer 23 is a request packet for investigating the maximum command size of the devices associated with other networks. One of various criteria conceivable for this purpose is to use a method for determining whether a command request packet prepared for investigation of the maximum size usable for transmission and receiving of a command is included in a command set defined for various protocols.

A device having the 1394 interface mounted thereon, for example, has a memory space capable of reading and writing through the 1394 unit from other devices connected at the same time, and a part of the memory space makes up a writable area called an FCP command register to receive a control command called the AV/C command. Various devices can be controlled by writing the data having the contents defined by the AV/C command in this specified address (OxFFFFFOOOOBOO address). The AV/C command defines various commands corresponding to the contents of the control operation including a command prepared for investigation of the maximum size usable for transmission and receiving of a command. In the case where the request packet is a write request to the above-mentioned address and the contents of the data thereof correspond to a command prepared for investigation of the maximum size usable for transmission and receiving of the command, therefore, it can be determined that the request packet is the one for investigating the maximum command size of a device associated with other networks.

In the case where the result of determination shows that the request packet is not for investigating the maximum command size of the device associated with other networks, the particular request packet is transferred directly to the network relaying device of the network associated with the receiving-side device designated by the header of the request packet using the data transmitting unit 32.

In the case where the result of determination shows that the request packet is aimed at investigating the maximum command size of the devices associated with other networks, on the other hand, the transaction content determining unit 24 delivers the information on the request packet transmitting-side device and the receiving-side device designated by the header of the request packet to the maximum transferable size determining unit 29 and thus instructs the maximum transferable size determining unit 29 to determine the maximum transferable data size for the communication path from the transmitting-side device to the receiving-side device (S22).

Next, in step S23 of the flowchart shown in FIG. 6, the maximum transferable size determining unit 29 determines the maximum transferable data size for the communication path from the transmitting-side device designated by the transaction content determining unit 24 to the receiving-side device based on the information on the maximum command size of the device on each bus managed in the receiving buffer size storage unit 33 (S23).

The maximum transferable data size is determined in such a manner that the maximum command sizes of a designated transmitting-side device, a relaying device of the network associated with the transmitting-side device, a relaying device of a network associated with a designated receiving-side device and the receiving-side device are compared with each other, and the minimum one of them is determined as a maximum transferable data size.

Assume, for example, that the transaction content determining unit 24 gives an instruction to determine the maximum transferable data size for the communication path from the DTV 11 of the first network N to the first VTR 13 of the second network N'. The determining unit 29 compares the maximum command size of 256 bytes of the DTV 11 making up a designated transmitting-side device, the maximum command size of 64 bytes of the first network relaying device 10 of the first network N associated with the DTV 11, the maximum command size of 32 bytes of the second network relaying device 10' of the second network N' associated with the first VTR 13 making up a designated receiving-side device and the maximum command size of 128 bytes of the first VTR 13 making up the receiving-side device with each other. As a result, the minimum size of 32 bytes is determined as a maximum transferable data size for the communication path from the DTV 11 to the first VTR 13.

The value of the data size thus determined is written in and managed by the maximum transferable size storage unit 27 as a determination result. An example of the information managed by the maximum transferable size storage unit 27 is shown in FIG. 4.

Next, in step 24 of the flowchart shown in FIG. 6, the transaction content determining unit 24, after giving an instruction to the maximum transferable size determining unit 29 to determine the maximum transferable data size in step 22, transfers a request packet to the network relaying device 10' of the network associated with the receiving-side device designated by the header of the request packet using the data transmitting unit 32. The network relaying device 10' at the receiving-side device that has received the request packet thus transferred transfers the particular request packet to the receiving-side device designated by the header of the request packet (S24).

In the example described above, the request packet is transferred to the first VTR 13, after being transferred to the second network relaying device 10' of the network associated with the first VTR 13 at the receiving-side device from the first network relaying device 10.

Next, in step 25 of the flowchart shown in FIG. 6, the request packet sent from the DTV 11 has proved to be a command request packet prepared to investigate the maximum size usable by the first VTR 13 for transmission and receiving of a command. Thus, the maximum size of 128 bytes that can be handled by the first VTR 13 for transmission and receiving of a command is returned by the first VTR 13 as a transaction response to the requesting DTV 11 of the first network N. This response packet, like the request packet, is first received by the second network relaying device 10' of the second network N', and then transferred to the first network relaying device 10 of the first network N associated with the DTV 11 designated at the receiving end (S25).

Next, the process of step 26 in the flowchart of FIG. 6 will be explained. The response packet received through the data receiving unit 31 is written in the receiving data buffer 23 by the first network relaying device 10. The transaction content determining unit 24 determines whether the response packet received is the one returned to the request packet transferred by the process of step 24.

In the case where the determination shows that the response packet is not the one returned to the request packet, the particular response packet is transferred to the receiving-side device (the transmitting-side device for the request packet) designated by the header of the response packet using the 1394 units 21, 22.

In the case where the determination shows that the response packet is the one returned to the request packet, on the other hand, the transaction content determining unit 24 acquires the maximum transferable size between the transmitting-side device for the request packet and the transmitting-side device for the response packet (the receiving-side device for the request packet) from the information managed by the maximum transferable size storage unit 27 (S26).

Next, the process of step 27 in the flowchart of FIG. 6 will be explained. The transaction content determining unit 24 instructs the data updating unit 25 to update the size information contained in the response packet together with the size information acquired. In the example described above, the maximum transferable size (32 bytes) between the DTV 11 making up a transmitting-side device for the request packet and the first VTR 13 making up a transmitting-side device for the response packet is acquired from the information (FIG. 4) managed by the maximum transferable size storage unit 27, and instructs the data updating unit 25 to update the size information (128 bytes) contained in the response packet to 32 bytes (S27).

In response, the data updating unit 25 updates the information on the maximum command size contained in the response packet to the value designated by the transaction content determining unit 24 and returns the updated information to the transaction content determining unit 24 (S27).

Next, in step 28 of the flowchart shown in FIG. 6, the response packet, with the information on the maximum command size thereof updated by the data updating unit 25, is transferred to the DTV 11 making up a receiving-side device designated by the header of the response packet through the 1394 units 21, 22 (S28).

Finally, in step 29 of the flowchart shown in FIG. 6, the DTV 11 that has received the response packet recognizes, from the contents of the response packet, that the maximum data size that can be handled by the first VTR 13 of the second network N' for transmission and receiving of the command is 32 bytes. As a result, in the case where a command packet exceeding 32 bytes in size is transmitted to the first VTR 13 by the DTV 11, the particular command packet is divided into a plurality of packets each not more than 32 bytes in size.

For some devices on the network, the maximum size usable for transmission and receiving of a command is set to a value smaller than the size of the receiving buffer actually mounted. Therefore, the maximum transferable size can be more effectively determined in terms of the maximum command size as in the second embodiment than in terms of the receiving buffer size as in the first embodiment.

As described in detail above, in the second embodiment as in the first embodiment, a packet is always divided into a plurality of packets not larger than the transferable size for the communication path between the devices on the wire network. Thus, stable data communication can be achieved.

### [Third embodiment]

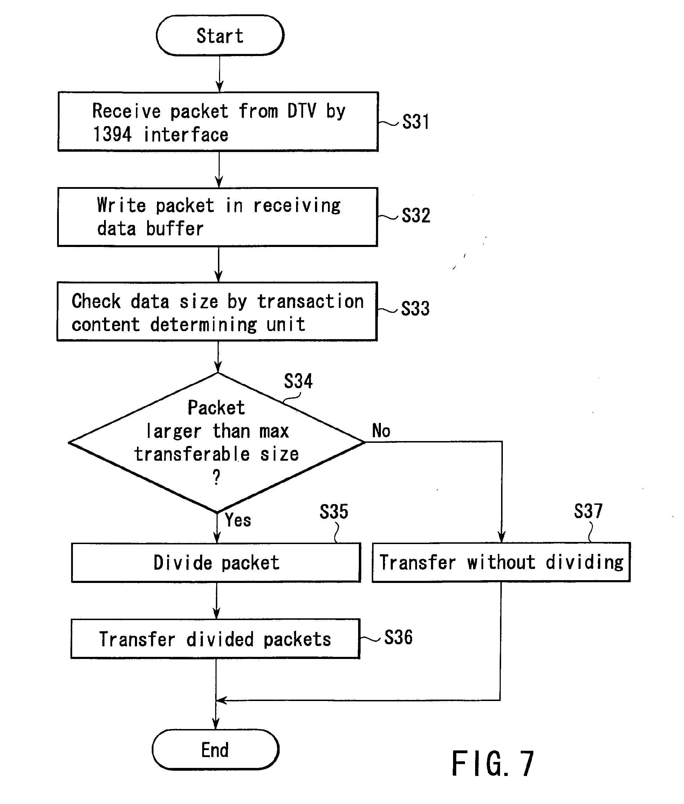

According to a third embodiment, unlike in the first and second embodiments, there is provided a network relaying device in which the maximum transferable size information of the transmitting-side device is not updated in accordance with the maximum transferable size determined, but the packet received by a network relaying device is divided by itself in accordance with the maximum transferable size. FIG. 7 is a flowchart showing the operation for determining the maximum transferable data size using the receiving buffer size of the network relaying device according to the third embodiment of the invention.

With reference to the drawings, the third embodiment of the invention will be explained. Also in the third embodiment, AV devices and two network relaying devices according to the invention are connected in the network configuration shown in FIG. 2. Each network relaying device has a configuration as shown in FIG. 1, for example.

Also in the network relaying device according to the third embodiment, the processing operation of steps S11 to S19 or steps S21 to S29 in the flowchart of FIG. 5 or 6 is performed similarly.

In step S18 or S28, the information on the maximum transferable data size for each communication path are stored and managed in the maximum transferable size storage unit 27. Under this condition, as shown in step S19 or S29, in the case where a transmitting-side device transmits or receives the data to and from another network, such data are expected to be transmitted in a plurality of sessions by dividing each packet into packets each not more than the maximum transferable data size. The third embodiment, however, deals with the process executed in the case where the network relaying device 10 has received packets larger than the maximum data size.

Specifically, in the flowchart of FIG. 7, assume that in response to a transaction request transmitted from the first VTR 13 shown in FIG. 2, the DTV 11 shown in FIG. 2 transmits a transaction response packet of 64 bytes in size to the first VTR 13. The response packet transmitted by the DTV 11 is received by the 1394 units 21, 22 (1394 connector, 1394 physical layer, 1394 link layer) of the first network relaying device 10 (S31), and then written in the receiving data buffer 23 (S32).

The response packet written in the receiving data buffer 23 is checked for the data size by the transaction content determining unit 24 (S33). The transaction content determining unit 24 acquires the maximum transferable size between the DTV 11 making up a transmitting-side device designated by the header of the response packet and the first VTR 13 designated as a receiving-side device, and checks to see whether the data size of the response packet has not exceeded the maximum size (S34). In the case where the data size does not exceed the maximum size, the packet is transferred to a destination device without executing any process (S37) .

In this case, the data size of the response packet is 64 bytes. Since the acquired maximum size is 32 bytes, however, the transaction content determining unit 24 instructs the transmission data dividing unit 30 to divide the response packet into packets each not more than 32 bytes (S35). In compliance with the instruction of the transaction content determining unit 24, the transmission data dividing unit 30 divides the response packet into two packets of 32 bytes and returns them to the transaction content determining unit 24. The transaction content determining unit 24 transmits the divided packets of 32 bytes to the first VTR 13 of the second network N' in two sessions using the data transmitting unit 32 (S36).

As the result of the process described above, even in the case where a request to transmit a packet larger than the maximum transferable size is received due to such causes as a defect of the dividing process of the transmitting-side device, stable communication can be established between devices by dividing the packet into packets not larger than the maximum transferable size.

The dividing process executed in the third embodiment is not necessarily accompanied by the transfer of the update information of the maximum transferable size to the transmitting-side device unlike in the first and second embodiments. Specifically, even in the case where the process of dividing all the packets is executed by the network relaying device according to the invention, a high-speed communication is made possible with the optimum packet size in similar fashion.

The network relaying device is an independent entity in each of the embodiments described above. Even in the case where the network relaying device is incorporated in the AV device, however, the present invention exhibits exactly the same effects of operation for the same reason as described above.

Although the IEEE 1394 is explained as an example of the standards for an interface in each of the embodiments described above, the invention is applicable also to other digital interfaces such as USB 2.0 with the same effect.

Further, the invention is applicable regardless of whether the network relaying device is aimed at radio communication or for wire communication.

The various embodiments of the invention described above can be achieved by those skilled in the art. Further, it is easy for those skilled in the art not only to conceive various modifications of these embodiments, but also to apply the invention to various embodiments without any inventive ability. This invention, therefore, is applicable to a wide range not in conflict with the principle and the novel features disclosed, and not limited to the embodiments described above.

It will thus be understood from the detailed description above that according to this invention, the buffer sizes of not only the transmitting- and receiving-side devices but also the network relaying device are taken into consideration, so that the minimum value of these buffer sizes is determined as a maximum transferable size. In this way, the packet size reflecting a value constituting a bottleneck to communication can be determined, thereby making it possible to provide a network relaying device and a network relaying method for achieving stable communication.

## Claims

1. A network relaying device **characterized by** comprising;
a determining unit (29) which detects size information for data transfer of devices including a transmitting-side device (11, 12) arranged on network, a transmitting-side network relaying device (10) connected to the transmitting-side device, a receiving-side network relaying device (10') for performing a relaying operation with the transmitting-side network relaying device (10), and a receiving-side device (13) connected to the receiving-side network relaying device (10') and arranged on the receiving-side networks, and which determines the minimum one of the size information as a maximum transferable size; and
an updating unit (25) which updates the maximum transferable size information of the transmitting-side device based on the maximum transferable size determined by the determining unit.

2. A network relaying device according to claim 1, **characterized in that** the size information detected by the determining unit is a receiving buffer size, and
wherein the determining unit determines the minimum one of the receiving buffer sizes as the maximum transferable size, when the determining unit determines that a request packet received by the network relaying device is aimed at investigating the receiving buffer sizes of the devices.

3. A network relaying device according to claim 1, **characterized in that** the size information detected by the determining unit is a usable maximum command size, and
wherein upon determination that a request packet received by the network relaying device is aimed at investigating the maximum command sizes of the devices, the determining unit determines the minimum one of the maximum command sizes as the maximum transferable size.

4. A network relaying device according to claim 1, **characterized in that** the determining unit executes at least the detecting process at the time of activating the network relaying device.

5. A network relaying device according to claim 1, **characterized in that** the determining unit executes at least the detecting process at the time of resetting the bus of the network relaying device.

6. A network relaying device according to claim 1, **characterized in that** the updating unit receives a response packet transmitted from the receiving-side device in accordance with a request packet from the transmitting-side device, and updates the response packet to the maximum transferable size determined by the determining unit.

7. A network relaying device according to claim 1, **characterized in that** the updating unit receives a response packet transmitted from the receiving-side device in accordance with a request packet from the transmitting-side device, and updates the response packet to the maximum transferable size determined by the determining unit, the updated response packet is transferred to the transmitting-side device so that the transmitting-side device appropriately dividing a transmission packet in accordance with the maximum transferable size.

8. A network relaying device according to claim 1, **characterized by** further comprising:
a dividing unit (30) for transmitting by dividing a packet received from at least the transmitting-side device in accordance with the maximum transferable size determined by the determining unit.

9. A network relaying device according to claim 8, **characterized in that** the size information detected by the determining unit is a receiving buffer size,
wherein the determining unit determines the minimum one of the receiving buffer sizes as the maximum transferable size, when the determining unit determines that a request packet received by the network relaying device is aimed at investigating the receiving buffer sizes of the devices.

10. A network relaying device according to claim 8, **characterized in that** the size information detected by the determining unit is a usable maximum command size, and
wherein the determining unit determines the minimum one of the maximum command sizes as the maximum transferable size, when the determining unit determines that a request packet received by the network relaying device is aimed at investigating the maximum command sizes of the devices.

11. A network relaying method **characterized by** comprising:
detecting size information for data transfer of devices including a transmitting-side device (11, 12) arranged on network, a transmitting-side network relaying device (10) connected to the transmitting-side device, a receiving-side network relaying device (10') for performing a relaying operation with the transmitting-side network relaying device (10), and a receiving-side device (13) connected to the receiving-side network relaying device (10') and arranged on the receiving-side networks;
determining the minimum one of the size information as a maximum transferable size; and
updating the maximum transferable size information of the transmitting-side device based on the determined maximum transferable size.

12. A network relaying method according to claim 11, **characterized in that** the detected size information detected is a receiving buffer size, and
wherein the minimum one of the receiving buffer sizes is determined as the maximum transferable size, when it is determined that a request packet received by the network relaying device is aimed at investigating the receiving buffer sizes of the devices.

13. A network relaying method according to claim 11, **characterized in that** the detected size information detected is a usable maximum command size, and
wherein the minimum one of the maximum command sizes is determined as the maximum transferable size, when it is determined that a request packet received by the network relaying device is aimed at investigating the maximum command sizes of the devices.

14. A network relaying method according to claim 11, **characterized in that** the detecting process is executed at the time of activating the network relaying device.

15. A network relaying method according to claim 11, **characterized in that** the detecting process is executed at the time of resetting the bus of the network relaying device.

16. A network relaying method according to claim 11, **characterized in that** the updating process is performed by receiving a response packet transmitted from the receiving-side device in accordance with a request packet from the transmitting-side device, and updating the response packet to the determined maximum transferable size.

17. A network relaying method according to claim 11, **characterized in that** the updating process is performed by receiving a response packet transmitted from the receiving-side device in accordance with a request packet from the transmitting-side device, and updating the response packet to the maximum transferable size determined by the determining unit, the updated response packet is transferred to the transmitting-side device so that the transmitting-side device appropriately divides a transmission packet in accordance with the maximum transferable size.

18. A network relaying method according to claim 11, **characterized by** further comprising:
dividing a packet received from the transmitting-side device in accordance with the determined maximum transferable size.

19. A network relaying method according to claim 18, **characterized in that** the detected size information is a receiving buffer size, and
wherein the minimum one of the receiving buffer sizes is determined as the maximum transferable size, when it is determined that a request packet received by the network relaying device is aimed at investigating the receiving buffer sizes of the devices.

20. A network relaying method according to claim 18, **characterized in that** the detected size information is a usable maximum command size, and
wherein the minimum one of the maximum command sizes as the maximum transferable size, when it is determined that a request packet received by the network relaying device is aimed at investigating the maximum command sizes of the devices.
